# FASCICULE DE BREVET EUROPEEN

(11) **EP 4 311 780 B1**
(45) Date de publication et mention de la délivrance du brevet: **03.09.2025**
(21) Numéro de dépôt: 23186176.6
(22) Date de dépôt: 18.07.2023
(51) Int. Cl.: B64F 5/10

(54) **DISPOSITIF RÉFÉRENTIEL DE POSITIONNEMENT DESTINÉ À POSITIONNER L'UN PAR RAPPORT À L'AUTRE AU MOINS UNE GRILLE DE PLANCHER DE CABINE ET UNE COQUE LATÉRALE D'UN AÉRONEF EN VUE D'UN ASSEMBLAGE D'UN CORPS DE FUSELAGE DE L'AÉRONEF**
BEZUGSPOSITIONVORRICHTUNG ZUR POSITIONIERUNG VON MINDESTENS EINEM KABINENBODENGITTER UND EINER SEITENSCHALE EINES FLUGZEUGS RELATIV ZUEINANDER FÜR DIE MONTAGE EINES FLUGZEUGRUMPFES
POSITIONING REFERENCE DEVICE INTENDED TO POSITION AT LEAST ONE CABIN FLOOR GRID AND A SIDE SHELL OF AN AIRCRAFT IN RELATION TO ONE ANOTHER FOR ASSEMBLING A FUSELAGE BODY OF THE AIRCRAFT

(30) Priorité: 25.07.2022 FR 2207610
(43) Date de publication de la demande: 31.01.2024
(73) Titulaire: Airbus Operations SAS, 31060 Toulouse (FR); Airbus Operations GmbH, 21129 Hamburg (DE)
(72) Inventeur: DATAS, Jean-Marc, 31060 TOULOUSE (FR); CARTEREAU, Thomas, 31060 TOULOUSE (FR); BOURIQUET, Jacques, 31060 TOULOUSE (FR); AQUILA, André, 31700 BLAGNAC (FR); DARBONVILLE, Nicolas, 31700 BLAGNAC (FR); AUTRET, Thomas, 31700 BLAGNAC (FR); BARBOULE, Joël, 31060 TOULOUSE (FR); BAYONNE, Sébastien, 31060 TOULOUSE (FR); GUERIN, Patrick, 31060 TOULOUSE (FR); VAN DER VEEN, Sjoerd, 31060 TOULOUSE (FR); TITZE, Ralph, 21129 HAMBURG (DE)
(74) Mandataire: Gevers & Orès

(56) Documents cités:
- FR-A1- 2 788 743
- FR-A1- 3 072 656
- US-A1- 2007 226 981
- US-B2- 10 029 805

## Description

### Domaine technique

La présente invention concerne un dispositif référentiel de positionnement destiné à positionner l'un par rapport à l'autre au moins une grille de plancher de cabine et une coque latérale d'un aéronef en vue d'un assemblage d'un corps de fuselage de l'aéronef.

### État de la technique

Un corps de fuselage (« fuselage barrel » en anglais) d'un aéronef comprend généralement plusieurs éléments, en particulier, une grille de plancher de cabine (« cabin floor grid » en anglais) de l'aéronef, une coque inférieure (« lower shell » en anglais), deux coques latérales (« side shells » en anglais) et une coque supérieure (« upper shell » en anglais). Ces éléments sont fabriqués indépendamment les uns des autres et les trous permettant leur assemblage entre eux sont percés avant leur assemblage. L'assemblage de ces éléments demande donc de mettre en œuvre des techniques d'assemblage de trou-à-trou (« hole-to-hole assembly » en anglais) et/ou d'assemblage de partie-à-partie (« part-to-part assembly » en anglais) afin de s'assurer qu'ils soient bien alignés pendant l'assemblage.

Afin de faciliter l'assemblage du corps de fuselage, la grille de plancher de cabine doit être positionnée de façon précise par rapport aux autres éléments du corps de fuselage. Les solutions permettant de réaliser le positionnement de ces deux éléments l'un par rapport à l'autre ne sont pas complètement satisfaisantes. Par exemple, les documents US 10 029 805 B2, FR 3 072 656 A1, FR 2 788 743 A1 et US 2007/226981 A1 présentent des solutions pour réaliser un positionnement d'un élément par rapport à un autre. Le document US 10 029 805 B2 montre un bâti d'assemblage comprenant un support ayant une surface sphérique. Cette surface sphérique s'engage dans une cavité correspondante d'un raccord d'interface sur le bâti.

### Exposé de l'invention

La présente invention a pour objet de remédier à cet inconvénient. Pour cela, elle concerne un dispositif référentiel de positionnement destiné à positionner l'un par rapport à l'autre au moins une grille de plancher de cabine et une coque latérale d'un aéronef en vue d'un assemblage d'un corps de fuselage de l'aéronef, la grille de plancher de cabine étant susceptible d'être transportée par un système de transport comportant deux paires de bras disposée chacune à une extrémité longitudinale d'un palonnier rectangulaire auquel la grille de plancher de cabine est susceptible d'être fixée, chaque bras des deux paires de bras présentant une extrémité comportant une surface en V, la surface en V présentant une première portion plane et une deuxième portion plane s'écartant l'une de l'autre en formant un V, le corps de fuselage après assemblage étant lié à un repère orthogonal défini par un axe X parallèle à un axe longitudinal du corps de fuselage, un axe Y horizontal et un axe Z vertical, le dispositif référentiel de positionnement étant configurée pour être utilisé en coopération avec trois autres dispositifs référentiels de positionnement.

Selon l'invention, le dispositif référentiel de positionnement comporte au moins :
- un premier support de fixation destiné à fixer le dispositif référentiel de positionnement au sommet d'un mât d'alignement d'une plateforme d'assemblage ;
- un support partiellement sphérique fixé au premier support de fixation, le support partiellement sphérique présentant au moins en partie une surface sphérique présentant un centre, la surface sphérique étant destinée à recevoir la surface en V d'une extrémité d'un bras du système de transport.

Ainsi, grâce à la surface sphérique du dispositif référentiel de positionnement, la surface en V de l'extrémité de bras du système de transport, la position de la grille de plancher de cabine est fixée de manière précise afin de faciliter l'assemblage des autres éléments du corps de fuselage.

Selon une particularité, la surface sphérique est destinée à entrer en contact avec la première portion plane et la deuxième portion plane de la surface en V respectivement à une première zone de contact de la première portion plane et une deuxième zone de contact de la deuxième portion plane, une première normale à la première portion plane de la surface en V au niveau de la première zone de contact et une deuxième normale à la deuxième portion plane de la surface en V au niveau de la deuxième zone de contact se coupant au centre de la surface sphérique lorsque la surface sphérique entre en contact avec la première portion plane et la deuxième portion plane de la surface en V.

Selon une autre particularité, le dispositif référentiel de positionnement comporte également un pion référentiel fixé au support partiellement sphérique, le pion référentiel faisant saillie sur la surface sphérique, le pion référentiel présentant un axe longitudinal parallèle à l'axe Y et passant par le centre de la surface sphérique, le pion référentiel étant destiné à recevoir une encoche agencée à l'extrémité du bras du système de transport.

Par ailleurs, le dispositif référentiel de positionnement comporte en outre une tige traversant diamétralement le support partiellement sphérique de part en part, la tige présentant un axe longitudinal parallèle à l'axe X et passant par le centre de la surface sphérique, la tige présentant deux extrémités faisant saillie de part et d'autre de la surface sphérique, les deux extrémités de la tige étant destinées à recevoir chacune une dent d'une extrémité d'une fourche à deux dents d'un dispositif de positionnement d'une coque latérale auquel est fixée une coque latérale.

Avantageusement, la tige est mobile en translation selon l'axe X par rapport au support partiellement sphérique.

De plus, la tige est également mobile en rotation autour de son axe longitudinal.

En outre, les deux extrémités de la tige comprennent chacune une rainure destinée à recevoir chacune une dent de l'extrémité de la fourche.

### Brève description des figures

Les figures annexées feront bien comprendre comment l'invention peut être réalisée. Sur ces figures, des références identiques désignent des éléments semblables.
La figure 1 représente une vue en perspective du dispositif référentiel de positionnement selon un mode de réalisation.
La figure 2 représente une vue en perspective du dispositif référentiel de positionnement et d'un module de rotation de la fourche.
La figure 3 représente une vue en perspective d'une plateforme d'assemblage comportant des mâts d'alignement aux sommets desquels sont fixés des dispositifs référentiels de positionnement.
La figure 4 représente une vue en perspective d'un dispositif référentiel de positionnement sur lequel est posée l'extrémité d'un bras d'un système de transport de grille de plancher de cabine.
La figure 5 représente une vue sur un plan parallèle aux axes Y et Z du dispositif référentiel de positionnement sur lequel est posée l'extrémité d'un bras d'un système de transport de grille de plancher de cabine.
La figure 6 représente une vue en perspective du dispositif référentiel de positionnement sur lequel est posée l'extrémité une fourche.
La figure 7 représente une vue en perspective d'une plateforme d'assemblage sur laquelle est assemblé un corps de fuselage et comprenant des mâts d'alignement aux sommets desquels sont fixés des dispositifs référentiels de positionnement.

### Description détaillée

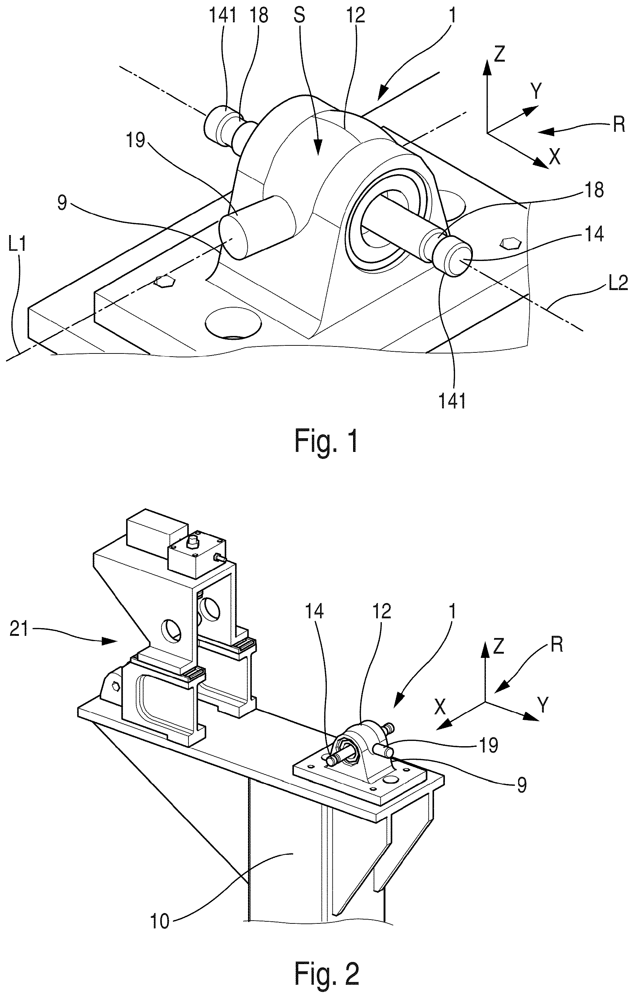

Le dispositif référentiel de positionnement 1 est représenté sur la figure 1.

Dans la suite de la description, l'adjectif « vertical » et l'adverbe « verticalement » font référence à la direction de la pesanteur. L'adjectif « horizontal » et l'adverbe « horizontalement » font référence à une direction perpendiculaire à la direction de la pesanteur.

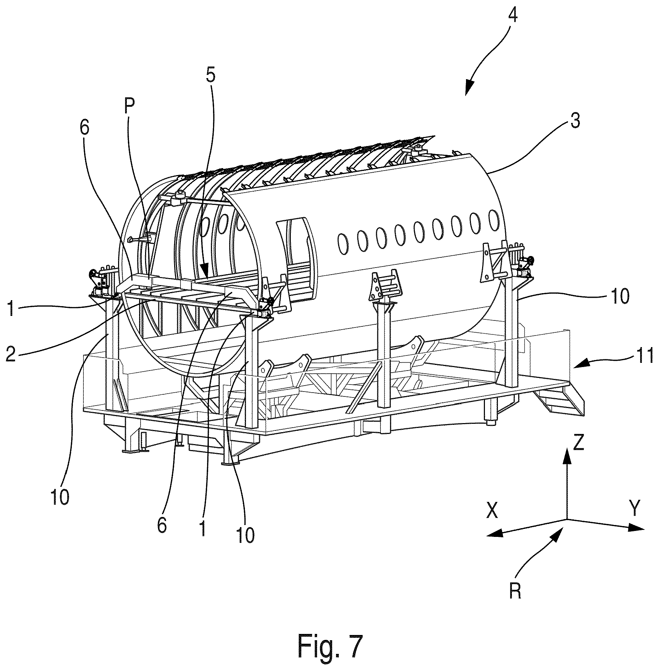

Le dispositif référentiel de positionnement 1 est destiné à positionner l'un par rapport à l'autre au moins une grille de plancher 2 et deux coques latérales 3 d'un aéronef AC en vue d'un assemblage d'un corps de fuselage 4 de l'aéronef AC (figure 7). À titre d'exemple non limitatif, la grille de plancher 2 peut correspondre à une grille de plancher de cabine, une grille de plancher d'un poste de pilotage, une grille de plancher de soute ou toute autre grille de plancher.

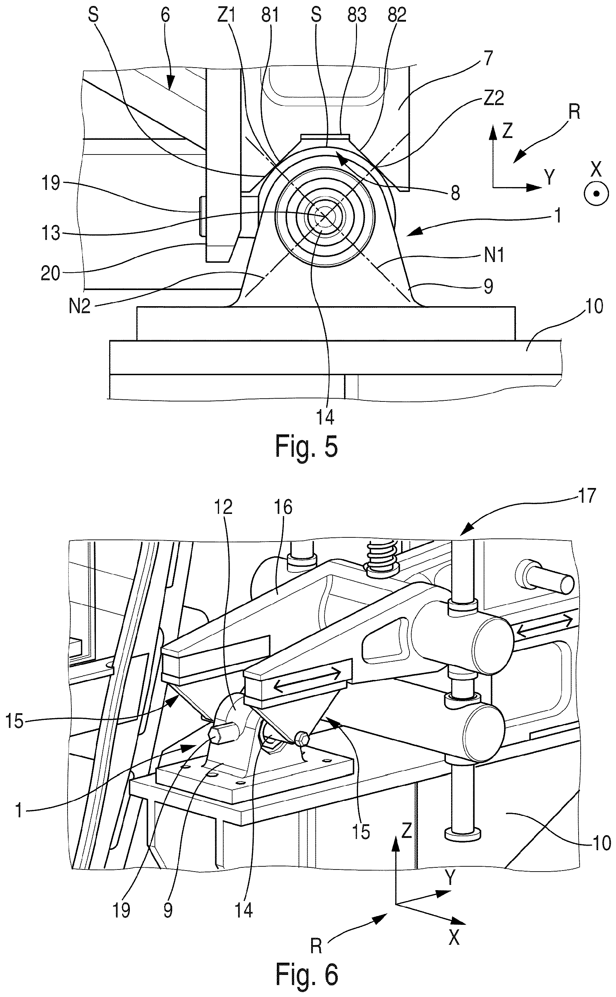

La grille de plancher 2 est susceptible d'être transportée par un système de transport 5 comportant deux paires de bras 6 disposée chacune à une extrémité longitudinale d'un palonnier rectangulaire P. La grille de plancher 2 est susceptible d'être fixée au palonnier rectangulaire P. Chaque bras 6 des deux paires de bras présentant une extrémité 7 est susceptible de comporter une surface en V 8 qui présente une première portion plane 81 et une deuxième portion plane 82 s'écartant l'une de l'autre en formant un V. La figure 5 représente la surface en V 8 selon un mode de réalisation. Dans ce mode de réalisation, la forme en V comprend la première portion plane 81, la deuxième portion plane 82 et une troisième portion plane 83 reliant la première portion plane 81 et la deuxième portion plane 82. La troisième portion plane 83 est perpendiculaire à la bissectrice de l'angle formé par la première portion plane 81 et la deuxième portion plane 82.

Le corps de fuselage 4 après son assemblage est lié à un repère orthogonal R défini par un axe X parallèle à un axe longitudinal du corps de fuselage 4, un axe Y horizontal et un axe Z vertical.

Le dispositif référentiel de positionnement 1 est configuré pour être utilisé en coopération avec trois autres dispositifs référentiels de positionnement 1.

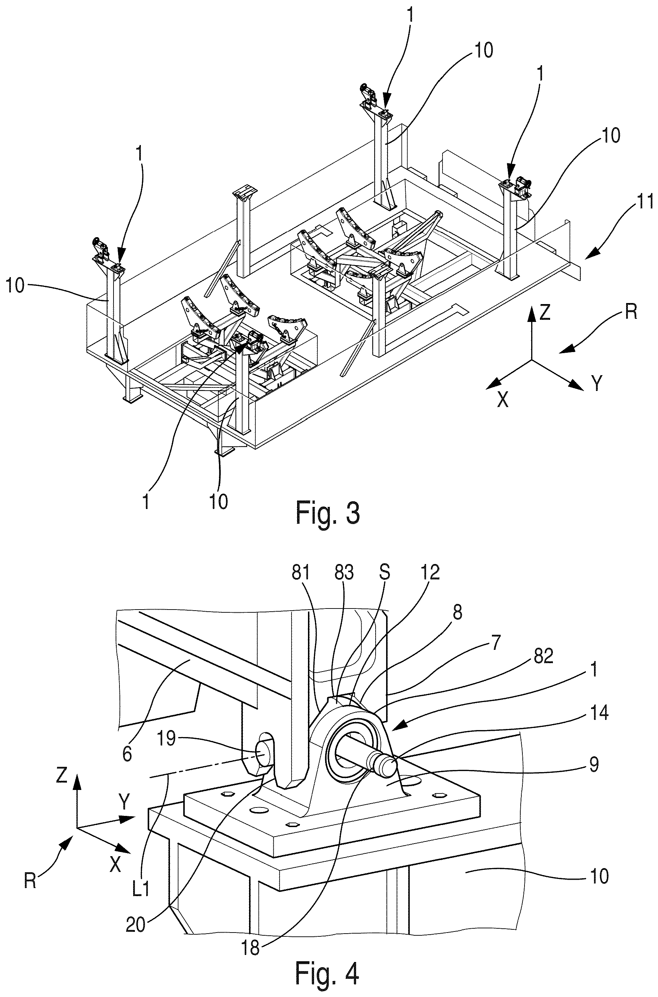

Comme représenté sur la figure 2 et la figure 3, le dispositif référentiel de positionnement 1 comporte au moins un premier support de fixation 9 destiné à fixer le dispositif référentiel de positionnement 1 au sommet d'un mât d'alignement 10 d'une plateforme d'assemblage 11.

Par exemple, le support de fixation 9 peut comprendre des ouvertures permettant le passage de vis afin de visser le dispositif référentiel de positionnement 1 au sommet d'un mât d'alignement 10.

Le dispositif référentiel de positionnement 1 comprend également un support partiellement sphérique 12 fixé au premier support de fixation 9. Ce support partiellement sphérique 12 présente au moins en partie (de la surface du support partiellement sphérique 12) une surface sphérique S qui présente un centre 13. La surface sphérique S est destinée à recevoir la surface en V 8 d'une extrémité 7 d'un bras 6 du système de transport 5.

Lorsque le dispositif référentiel de positionnement 1 est utilisé en coopération avec trois autres dispositifs référentiels de positionnement 1. La surface sphérique S de chacun des trois autres dispositifs référentiels de positionnement 1 est également destinée à recevoir la surface en V 8 de l'extrémité 7 des autres bras 6 du système de transport 5.

Avantageusement, la surface sphérique S est destinée à entrer en contact avec la première portion plane 81 et la deuxième portion plane 82 de la surface en V 8. La surface sphérique S est destinée à entrer en contact avec une première zone de contact Z1 de la première portion plane 81 et avec une deuxième zone de contact Z2 de la deuxième portion plane 82. La première zone de contact Z1 et la deuxième zone de contact Z2 peuvent correspondre à un point (figure 5).

La première normale N1 à la première portion plane 81 de la surface en V 8 au niveau de la première zone de contact Z1 et la deuxième normale N2 à la deuxième portion plane 82 de la surface en V 8 au niveau de la deuxième zone de contact Z2 se coupent sensiblement au centre 13 de la surface sphérique S lorsque la surface sphérique S entre en contact avec la première portion plane 81 et la deuxième portion plane 82 de la surface en V 8 (figure 5).

Par ailleurs, le dispositif référentiel de positionnement 1 peut comporter également un pion référentiel 19 fixé au support partiellement sphérique 12. Le pion référentiel 19 fait saillie sur la surface sphérique S. Le pion référentiel 19 présente un axe longitudinal L1 parallèle à l'axe Y et passant par le centre de la surface sphérique. Le pion référentiel 19 est destiné à recevoir une encoche 20 agencée à l'extrémité 7 d'un bras 6 du système de transport 5 comme représenté sur la figure 4 et la figure 5. Le pion référentiel 19 peut présenter une forme cylindrique. L'encoche 20 présente alors une forme partiellement cylindrique au moins en partie complémentaire à la forme cylindrique du pion référentiel 19. La forme partiellement cylindrique de l'encoche 20 comporte un axe longitudinal destiné à être parallèle à l'axe longitudinal L1 du pion référentiel 19. Le pion référentiel 19 permet de s'assurer que la surface en V 8 est positionnée de façon que la première zone de contact Z1 et la deuxième zone de contact Z2 soient comprises dans un plan diamétral de la surface sphérique S (passant par le centre 13 de la surface sphérique S).

Le dispositif référentiel de positionnement 1 peut comporter en outre une tige 14 qui traverse diamétralement le support partiellement sphérique 12 de part en part. La tige 14 présente un axe longitudinal L2 parallèle à l'axe X et passant par le centre 13 de la surface sphérique S. L'axe longitudinal L2 est perpendiculaire à l'axe longitudinal L1. La tige 14 présente deux extrémités 141 faisant saillie de part et d'autre de la surface sphérique S. Les deux extrémités 141 de la tige 14 sont destinées à recevoir chacune une dent 15 d'une extrémité d'une fourche 16 à deux dents 15 d'un dispositif de positionnement 17 d'une coque latérale 3 auquel est fixée une coque latérale 3 (figure 6). L'autre extrémité de la fourche 16 peut être reçue par un module de rotation 21 de la fourche 16 fixé au sommet du mât d'alignement 10 sur lequel le dispositif référentiel de positionnement 1 est destiné à être fixé (figure 2).

Avantageusement, la tige 14 est mobile en translation selon l'axe X par rapport au support partiellement sphérique 12. Ainsi, la fourche 16 peut se déplacer en translation selon l'axe X.

De plus, la tige 14 peut être également mobile en rotation autour de son axe longitudinal L1. Ainsi, la fourche peut être mobile en rotation autour de l'axe L1.

Les deux extrémités 141 de la tige 14 peuvent comprendre chacune une rainure 18 destinée à recevoir chacune une dent 15 de l'extrémité de la fourche 16. Ces rainures 18 permettent d'éviter que les dents 15 de la fourche 16 ne glissent sur la tige 14 selon l'axe X. Ainsi, la fourche 16 et la tige 14 se déplacent solidairement en translation selon l'axe X lorsque les dents 15 de la fourche 16 sont insérées chacune dans une rainure 18 de la tige 14.

Grâce à la tige 14 qui reçoit une extrémité d'une fourche 16 d'un dispositif de positionnement 17 d'une coque latérale 3, à la surface sphérique S ainsi qu'au pion référentiel 19, la grille de plancher 2 et la ou les coques latérales 3 sont positionner précisément l'un par rapport à l'autre pour faciliter l'assemblage du corps de fuselage 4.

La surface sphérique S permet de bloquer la position de la surface en V 8 de chaque bras 6 du palonnier rectangulaire P selon l'axe Y et l'axe Z. Le pion référentiel 19 permet de bloquer la position selon X de la surface en V.

Les rainures 18 aux extrémités 141 de la tige 14 permet de bloquer la position de la fourche 16 du dispositif de positionnement 17 de la coque latérale 3 selon l'axe Y et l'axe Z. La tige 14 pouvant se déplacer en translation selon l'axe X, la fourche 16 peut se déplacer librement selon l'axe X. Le déplacement selon l'axe X autorise la mise en œuvre de la mise en place des coques latérale 3 par rapport à la grille de plancher 2. En outre, la fourche 16 peut entrer en rotation autour de la tige 14 selon un axe parallèle à l'axe X. Cette rotation permet de faciliter un assemblage de trou-à-trou et/ou un assemblage de partie-à-partie entre les coques latérales 3 et la coque supérieure d'un fuselage.

## Revendications

1. Dispositif référentiel de positionnement (1) destiné à positionner l'un par rapport à l'autre au moins une grille de plancher de cabine (2) et une coque latérale (3) d'un aéronef (AC) en vue d'un assemblage d'un corps de fuselage (4) de l'aéronef, la grille de plancher de cabine (2) étant susceptible d'être transportée par un système de transport (5) comportant deux paires de bras (6) disposée chacune à une extrémité longitudinale d'un palonnier rectangulaire (P), la grille de plancher de cabine (2) étant susceptible d'être fixée au palonnier rectangulaire (P), chaque bras (6) des deux paires de bras présentant une extrémité (7) comportant une surface en V (8), la surface en V (8) présentant une première portion plane (81) et une deuxième portion plane (82) s'écartant l'une de l'autre en formant un V, le corps de fuselage (4) après assemblage étant lié à un repère orthogonal (R) défini par un axe X parallèle à un axe longitudinal du corps de fuselage (4), un axe Y horizontal et un axe Z vertical, le dispositif référentiel de positionnement (1) étant configurée pour être utilisé en coopération avec trois autres dispositifs référentiels de positionnement (1), ledit dispositif référentiel de positionnement comportant au moins :
- un premier support de fixation (9) destiné à fixer le dispositif référentiel de positionnement (1) au sommet d'un mât d'alignement (10) d'une plateforme d'assemblage (11) ;
- un support partiellement sphérique (12) fixé au premier support de fixation (9), le support partiellement sphérique (12) présentant au moins en partie une surface sphérique (S) présentant un centre (13), la surface sphérique (S) étant destinée à recevoir la surface en V (8) d'une extrémité (7) d'un bras (6) du système de transport (5),
le dispositif référentiel de positionnement (1) comportant en outre une tige (14) traversant diamétralement le support partiellement sphérique (12) de part en part, la tige (14) présentant un axe longitudinal (L2) parallèle à l'axe X et passant par le centre (13) de la surface sphérique (S), la tige (14) présentant deux extrémités (141) faisant saillie de part et d'autre de la surface sphérique (S), les deux extrémités (141) de la tige (14) étant destinées à recevoir chacune une dent (15) d'une extrémité d'une fourche (16) à deux dents (15) d'un dispositif de positionnement (17) d'une coque latérale (3) auquel est fixée une coque latérale (3).

2. Dispositif selon la revendication 1,
**caractérisé en ce que** la surface sphérique (S) est destinée à entrer en contact avec la première portion plane (81) et la deuxième portion plane (82) de la surface en V (8) respectivement à une première zone de contact (Z1) de la première portion plane (81) et une deuxième zone de contact (Z2) de la deuxième portion plane (82), une première normale (N1) à la première portion plane (81) de la surface en V (8) au niveau de la première zone de contact (Z1) et une deuxième normale (N2) à la deuxième portion plane (82) de la surface en V (8) au niveau de la deuxième zone de contact (Z2) se coupant au centre (13) de la surface sphérique (S) lorsque la surface sphérique (S) entre en contact avec la première portion plane (81) et la deuxième portion plane (82) de la surface en V (8).

3. Dispositif selon l'une quelconque des revendications 1 et 2,
**caractérisé en ce qu'**il comporte également un pion référentiel (19) fixé au support partiellement sphérique (12), le pion référentiel (19) faisant saillie sur la surface sphérique (S), le pion référentiel (19) présentant un axe longitudinal (L1) parallèle à l'axe Y et passant par le centre (13) de la surface sphérique (S), le pion référentiel (19) étant destiné à recevoir une encoche (20) agencée à l'extrémité (7) du bras (6) du système de transport (5).

4. Dispositif selon la revendication 1,
**caractérisé en ce que** la tige (14) est mobile en translation selon l'axe X par rapport au support partiellement sphérique (12).

5. Dispositif selon l'une quelconque des revendications 1 et 4,
**caractérisé en ce que** la tige (14) est également mobile en rotation autour de son axe longitudinal (L1).

6. Dispositif selon l'une quelconque des revendications 1 à 5,
**caractérisé en ce que** les deux extrémités (141) de la tige (14) comprennent chacune une rainure (18) destinée à recevoir chacune une dent (15) de l'extrémité de la fourche (16).

## Patentansprüche

1. Bezugspositionierungsvorrichtung (1) zum gegenseitigen Positionieren mindestens eines Kabinenbodengitters (2) und einer Seitenschale (3) eines Luftfahrzeugs (AC) zur Montage eines Rumpfkörpers (4) des Luftfahrzeugs, wobei das Kabinenbodengitter (2) durch ein Transportsystem (5) transportierbar ist, das zwei Armpaare (6) umfasst, die jeweils an einem länglichen Ende einer rechteckigen Traverse (P) angeordnet sind, wobei das Kabinenbodengitter (2) an der rechteckigen Traverse (P) befestigbar ist, wobei jeder Arm (6) der zwei Armpaare ein Ende (7) aufweist, das eine V-förmige Oberfläche (8) umfasst, wobei die V-förmige Oberfläche (8) einen ersten ebenen Abschnitt (81) und einen zweiten ebenen Abschnitt (82) aufweist, die sich unter Bildung eines V voneinander entfernen, wobei der Rumpfkörper (4) nach der Montage mit einem orthogonalen Koordinatensystem (R) verbunden ist, das durch eine zu einer Längsachse des Rumpfkörpers (4) parallele X-Achse, eine horizontale Y-Achse und eine vertikale Z-Achse definiert ist, wobei die Bezugspositionierungsvorrichtung (1) konfiguriert ist, um in Zusammenarbeit mit drei weiteren Bezugspositionierungsvorrichtungen (1) verwendet zu werden,
wobei die Bezugspositionierungsvorrichtung mindestens umfasst:
- einen ersten Befestigungsträger (9) zum Befestigen der Bezugspositionierungsvorrichtung (1) an der Spitze eines Ausrichtungsmasts (10) einer Montageplattform (11);
- einen am ersten Befestigungsträger (9) befestigten, teilweise kugelförmigen Träger (12), wobei der teilweise kugelförmige Träger (12) zumindest teilweise eine einen Mittelpunkt (13) aufweisende kugelförmige Oberfläche (S) aufweist, wobei die kugelförmige Oberfläche (S) zur Aufnahme der V-förmigen Oberfläche (8) eines Endes (7) eines Arms (6) des Transportsystems (5) bestimmt ist,
wobei die Bezugspositionierungsvorrichtung (1) weiter einen Stab (14) umfasst, der den teilweise kugelförmigen Träger (12) diametral durchquert, wobei der Stab (14) eine Längsachse (L2) parallel zur X-Achse und hindurchgehend durch den Mittelpunkt (13) der kugelförmigen Oberfläche (S) aufweist, wobei der Stab (14) zwei Enden (141) aufweist, die beiderseits der kugelförmigen Oberfläche (S) hervorstehen, wobei die zwei Enden (141) des Stabs (14) jeweils zur Aufnahme eines Zahns (15) eines Endes einer Gabel (16) mit zwei Zähnen (15) einer Positionierungsvorrichtung (17) einer Seitenschale (3) bestimmt sind, an der eine Seitenschale (3) befestigt ist.

2. Vorrichtung nach Anspruch 1,
**dadurch gekennzeichnet, dass** die kugelförmige Oberfläche (S) dazu bestimmt ist, mit dem ersten ebenen Abschnitt (81) und dem zweiten ebenen Abschnitt (82) der V-förmigen Oberfläche (8) jeweils an einer ersten Kontaktzone (Z1) des ersten ebenen Abschnitts (81) und einer zweiten Kontaktzone (Z2) des zweiten ebenen Abschnitts (82) in Kontakt zu kommen, wobei eine erste Normale (N1) auf den ersten ebenen Abschnitt (81) der V-förmigen Oberfläche (8) im Bereich der ersten Kontaktzone (Z1) und eine zweite Normale (N2) auf den zweiten ebenen Abschnitt (82) der V-förmigen Oberfläche (8) im Bereich der zweiten Kontaktzone (Z2) sich im Mittelpunkt (13) der kugelförmigen Oberfläche (S) schneiden, wenn die kugelförmige Oberfläche (S) mit dem ersten ebenen Abschnitt (81) und dem zweiten ebenen Abschnitt (82) der V-förmigen Oberfläche (8) in Kontakt kommt.

3. Vorrichtung nach einem der Ansprüche 1 und 2,
**dadurch gekennzeichnet, dass** sie weiter einen Bezugszapfen (19) umfasst, der an dem teilweise kugelförmigen Träger (12) befestigt ist, wobei der Bezugszapfen (19) auf der kugelförmigen Oberfläche (S) hervorsteht, wobei der Bezugszapfen (19) eine Längsachse (L1) parallel zur Y-Achse und hindurchgehend durch den Mittelpunkt (13) der kugelförmigen Oberfläche (S) aufweist, wobei der Bezugszapfen (19) dazu bestimmt ist, eine am Ende (7) des Arms (6) des Transportsystems (5) angeordnete Einkerbung (20) aufzunehmen.

4. Vorrichtung nach Anspruch 1,
**dadurch gekennzeichnet, dass** der Stab (14) in Bezug auf den teilweise kugelförmigen Träger (12) entlang der X-Achse translatorisch beweglich ist.

5. Vorrichtung nach einem der Ansprüche 1 und 4,
**dadurch gekennzeichnet, dass** der Stab (14) auch um seine Längsachse (L1) drehbeweglich ist.

6. Verfahren nach einem der Ansprüche 1 bis 5,
**dadurch gekennzeichnet, dass** die zwei Enden (141) des Stabs (14) jeweils eine Nut (18) umfassen, die jeweils zur Aufnahme eines Zahns (15) des Endes der Gabel (16) bestimmt ist.

## Claims

1. A referential positioning device (1) intended to position relative to each other at least one cabin floor grid (2) and one side shell (3) of an aircraft (AC) in order to assemble a fuselage barrel (4) of the aircraft, the cabin floor grid (2) being able to be transported by a transport system (5) comprising two pairs of arms (6), each pair disposed at a longitudinal end of a rectangular spreader (P), the cabin floor grid (2) being able to be fixed to the rectangular spreader (P), each arm (6) of the two pairs of arms having an end (7) with a V-shaped surface (8), the V-shaped surface (8) having a first plane portion (81) and a second plane portion (82) extending away from each other to form a V, the fuselage barrel (4), after assembly, being linked to an orthogonal frame of reference (R) defined by an axis X parallel to a longitudinal axis of the fuselage barrel (4), a horizontal axis Y and a vertical axis Z, the referential positioning device (1) being configured to be used in cooperation with three other referential positioning devices (1), said referential positioning device comprising at least:
- a first fixing support (9) intended to fix the referential positioning device (1) to the top of an alignment post (10) of an assembly platform (11);
- a partially spherical support (12) fixed to the first fixing support (9), the partially spherical support (12) having at least in part a spherical surface (S) with a center (13), the spherical surface (S) being intended to receive the V-shaped surface (8) of an end (7) of an arm (6) of the transport system (5),
the referential positioning device (1) additionally comprising a rod (14) passing diametrically all the way through the partially spherical support (12), the rod (14) having a longitudinal axis (L2) parallel to the axis X and passing through the center (13) of the spherical surface (S), the rod (14) having two ends (141) protruding from either side of the spherical surface (S), the two ends (141) of the rod (14) each being intended to receive a tooth (15) of an end of a fork (16) that has two teeth (15) of a device (17) for positioning a side shell (3), to which device a side shell (3) is fixed.

2. The device as claimed in claim 1,
**characterized in that** the spherical surface (S) is intended to come into contact with the first plane portion (81) and the second plane portion (82) of the V-shaped surface (8) respectively at a first contact zone (Z1) of the first plane portion (81) and a second contact zone (Z2) of the second plane portion (82), a first normal (N1) to the first plane portion (81) of the V-shaped surface (8) at the level of the first contact zone (Z1) and a second normal (N2) to the second plane portion (82) of the V-shaped surface (8) at the level of the second contact zone (Z2) intersecting at the center (13) of the spherical surface (S) when the spherical surface (S) comes into contact with the first plane portion (81) and the second plane portion (82) of the V-shaped surface (8).

3. The device as claimed in either of claims 1 and 2,
**characterized in that** it also comprises a referential pin (19) fixed to the partially spherical support (12), the referential pin (9) protruding from the spherical surface (S), the referential pin (19) having a longitudinal axis (L1) parallel to the axis Y and passing through the center (13) of the spherical surface (S), the referential pin (19) being intended to receive a notch (20) arranged at the end (7) of the arm (6) of the transport system (5).

4. The device as claimed in claim 1,
**characterized in that** the rod (14) is movable in translation along the axis X with respect to the partially spherical support (12).

5. The device as claimed in either of claims 1 and 4,
**characterized in that** the rod (14) is also movable in rotation about its longitudinal axis (L1).

6. The device as claimed in any one of claims 1 to 5,
**characterized in that** the two ends (141) of the rod (14) each comprise a groove (18), each groove (18) intended to receive a tooth (15) of the end of the fork (16).
